(19)

Europäisches
Patentamt
European
Patent Office
Office européen
des brevets

(11)    **EP 2 098 942 A1**

(12)    **EUROPEAN PATENT APPLICATION**

(43) Date of publication:
**09.09.2009 Bulletin 2009/37**

(51) Int Cl.:
*G06F 1/20* (2006.01)          *G06F 9/50* (2006.01)

(21) Application number: **08250715.3**

(22) Date of filing: **03.03.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **British Telecommunications public
limited company
81 Newgate Street
London EC1A 7AJ (GB)**

(72) Inventor: **The designation of the inventor has not
yet been filed**

(74) Representative: **Lidbetter, Timothy Guy Edwin et
al
BT Group Legal
Intellectual Property Department
PP C5A
BT Centre
81 Newgate Street
London EC1A 7AJ (GB)**

(54)    **Computing system and method of operation thereof**

(57)    A method of operating a data centre is disclosed in which the distribution of processing load takes into account the discrete steps that occur in power consumption by cooling equipment (e.g. an increase in speed of a fan from one preset speed to another preset speed or the starting of an additional air-conditioning unit). For each of a number of cooling regions, data representing expected increases in power consumption resulting from the running of additional software on a processor within that cooling region are stored in persistent storage. On receiving a request from an application for additional resource, a power management component for a cooling region within the data centre looks up the stored data and predicts a temperature rise for the cooling region if the additional resource was to be provided from within the cooling region. If the temperature rise is sufficient to trigger a step change in the power consumption of air-conditioning equipment (including fans and coolers), then an attempt is made to provide the requested resource from a different cooling region.

Figure 7

**Description**

The present invention relates to a computing system and method of operation of a computing system. The invention has particular utility in data centres.

The advent of the World Wide Web has brought on tremendous growth in the size and number of data centres.

The use of energy in data centres is a problem of growing importance. The US Environmental Protection Agency's 'Report to Congress on Server and Data Center Energy Efficiency Public Law 109-431' of August 2007 estimates that data centres in the United States consumed 61 billion kilowatt-hours of electrical energy in 2006. The report states that accounts for 1.5% of total US electricity consumption and indicates that the electricity consumption by data centres could double again by 2011 unless the efficiency of data centre operation is improved. It will be recognised that the electricity is consumed both to power computers in the data centres, and for cooling to counteract the heat given off by those computers in operation.

The report acknowledges that because energy efficiency is a secondary attribute of the equipment used in data centres, changes that might compromise performance will generally not be implemented.

In a technical report from HP's Laboratories in Palo Alto entitled "Balance of Power: Dynamic Thermal Management for Internet Data Centers", Ratnesh Sharma et al propose that the temperature distribution within a data centre should be modulated by migrating workload between servers to achieve a thermally balanced distribution of load across a 'programmable data centre'. The report explains that in a 'programmable data centre', instead of physically wiring each resource into a static topology, compute, storage and network components are treated as shared, virtualized resources that can be dynamically partitioned and allocated across hosted applications based on QoS requirements.

All but one of the authors of that paper is named as an inventor on US Patent application 2006/0047808. That patent application describes how a workload request (a request to supply services to a given application) received at a data centre will be allocated to a server in that data centre in dependence upon a number of factors including the temperature of the intake and exhaust air cooling the server, and the averages of those temperatures over some or all the servers in the data centre.

The above technical report and US Patent application seeks to provide an even temperature distribution across the data centre by placing more workload on those servers that are most efficiently cooled. Evening out the temperature distribution in this way allows the air-conditioning unit to have a higher discharge temperature, which in turn increases the coefficient of performance of the air conditioning unit and thus allows a reduction in the electrical power required to deliver a given cooling capacity.

According to the present invention, there is provided a method of operating a computer system comprising a group of interconnected computers, said method comprising:

storing, for each of a plurality of subsets of the computers within the computer system, temperature threshold values whose surpassing would trigger a stepwise change in the amount of power required by environmental conditioning equipment to keep the temperature in said subset at a desired level;

measuring the temperature within each subset;

receiving requests for data processing to be carried out by said computer system;

allocating requested data processing to subsets which are least likely to require a stepwise change in the amount of power required to keep the temperature in said subset at a desired level.

By moving workload to cooling regions which can provide sufficient cooling without stepwise increase in power supplied to a cooling system which is shared by one or more computers in the cooling region, the cooling power consumed by the computer system is reduced.

The invention can be implemented at different levels of granularity. Thus the subset may be a data centre within a group of data centres, or a rack of servers within a data centre, or even comprise only one server within a data centre.

There now follows, by way of example only, a description of embodiments of the present invention. The description makes reference to the accompanying drawings in which:

Figure 1 is a schematic drawing of a blade server;

Figure 2 is a cabinet containing two shelves of blade servers;

Figure 3 shows a data centre with associated air-conditioning equipment;

Figure 4 shows a data centre connected to users' computers via the Internet;

Figure 5 shows a plurality of blade servers running software to different levels of a software stack and software running on an associated rack management computer;

Figure 6 shows a data structure maintained by each rack manager; and

Figure 7 is a flow-chart which how a rack manager handles a request from an application for more resource.

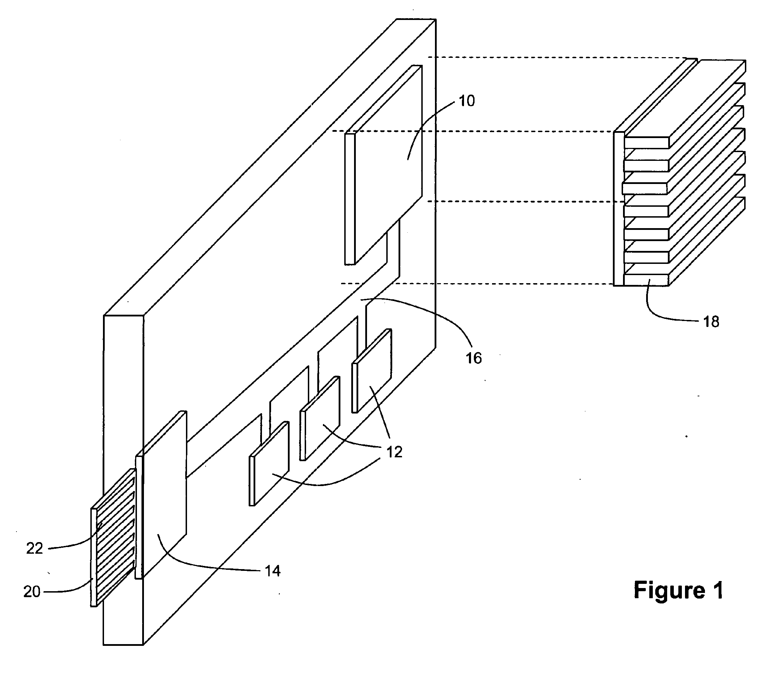

A blade server (Figure 1) - for example an HP Proliant BL25p Server Blade - is a printed circuit assembly having one or more microprocessor integrated circuits (IC) 10, volatile memory ICs 12, network interface cards 14 and communication busses 16 which provide for communication between those units. As will be understood in the art, many other components are present in the printed circuit assembly, and additional ICs are to be found on the side of the printed circuit assembly hidden in Figure 1. A modern processor IC can consume nearly 100W of power, nearly all of which will be output as heat energy. In order to help keep the operating temperatures of the integrated circuits 10, 12 within a preferred range, heat sinks 18 are attached to some ICs on the blade server.

The network interface card 14 includes edge connector 20. Data is input to and output from the blade server via some of the pads 22 on the edge connector 20. Power is supplied via other pads 22 on the edge connector 20 (normally different DC voltage levels are available on different pins). Those skilled in the art will realise that in practice many more pads 22 than shown in Figure 1 are provided.

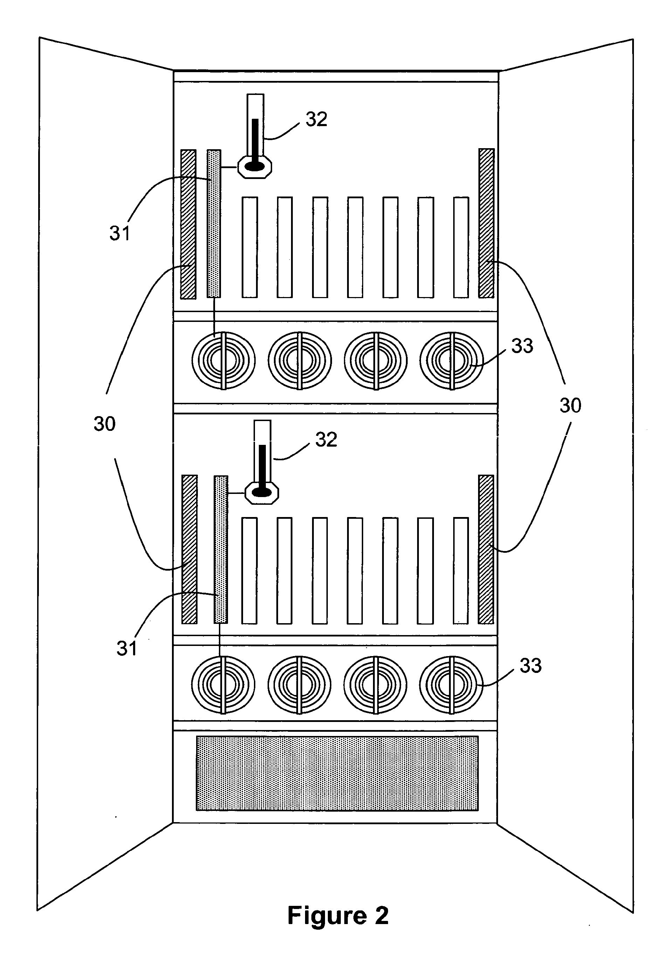

Figure 2 shows a blade server cabinet (for example a p-Class Server Blade Cabinet from HP) having five shelves. The cabinet includes a backplane (not shown) which provides data connections with the edge connectors 20 on each of the blade servers and also distributes DC power to the blade servers and switching units 30, and AC power to the fans 32.

The first and third shelves (counting from the top) each have a group of eight blade servers with a switching unit 30 on either side. The switching units route data signals from the backplane to and from communications links with other blade cabinets, storage devices, a data centre administration computer and with external networks. The leftmost blade server on each shelf is a rack management server 31. The rack management server 31 has built-in persistent storage (a hard disk) and is connected to a rack temperature sensor 32.

The second and fourth shelves carry fans 33 for circulating the air in the data centre over the blade servers and thus carry the heat that is generated by the blade servers away from the cabinet and out into the aisles. The fans include a rack fan speed indicator which provides an indication of the rack fan speed to the rack management server 31.

The fans increase their speed (and thus airflow) - and hence use more power - as the temperature of the air in the rack rises. Examples of the increase are given in Table 1 below:

**Table 1**

| Rack Temperature (degrees C) | Fan Speed | Airflow (litres per second) |
| --- | --- | --- |
| < 15 | OFF | 0 |
| 15-18 | LOW | 30 |
| 18-21 | MEDIUM | 60 |
| 21+ | HIGH | 90 |

The speed of the fans increases and decreases in steps as the rack temperature changes. As will be explained below, the rack management server 31 attempts to avoid exceeding rack temperature thresholds which trigger an increase in the speed of the fans.

Returning to Figure 2, the bottom shelf carries a power supply unit 30 which transforms an ordinary AC power supply to the cabinet to DC power for supply to each of the blade servers via the pads 22 on the blade server's edge connectors 20.

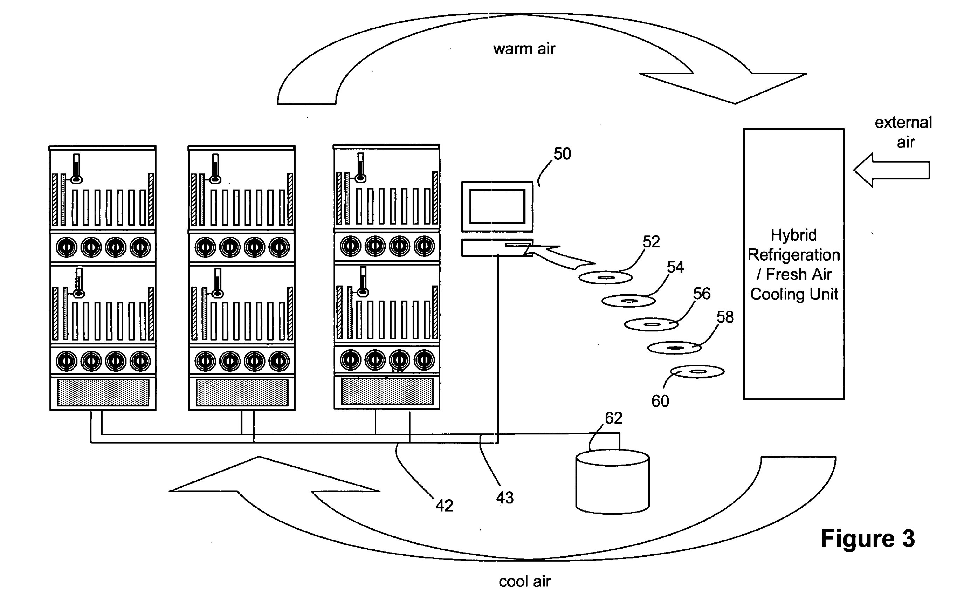

Figure 3 shows a data centre having a plurality of blade cabinets (in practice, there might be hundreds of such cabinets within a data centre) interconnected to one another via an internal management network 42. The blade servers are also connected via links 43 to a RAID storage unit 62.

The data centre has a hybrid refrigeration / fresh air cooling unit 45 which combines fresh air cooling (which uses variable fan speed to draw in differing amounts of external air) with refrigeration. The unit is programmed to use fresh-air cooling when possible.

The cooling unit feeds cool air under the floor, that cool air then being drawn up through perforated panels in the floor. The fans in the blade cabinets pull this air into the front of the cabinet and then exhaust the (hotter) air from the rear of the cabinet. The hotter air is then drawn through perforated panels in the ceiling of the data centre back to the hybrid cooling unit 45. The air conditioning unit then uses electrical power to cool the air to a degree which is dependent on the temperature of the air drawn in through the perforated panels in the ceiling.

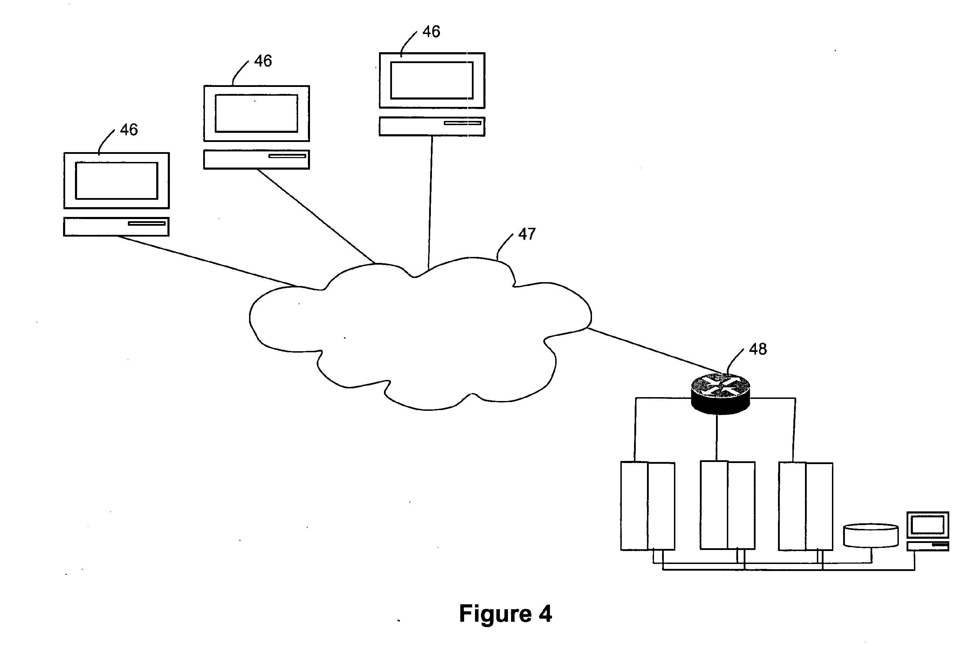

Figure 4 shows how the data centre receives user enquiries received via the Internet 47 from user computers 46. The requests are routed to a server running the application with which the user in interacting by request routing device 48.

Returning to Figure 3, each data centre manager is provided with a data centre administration computer 50 connected to the internal management network 42 which allows administration of the blade servers in the data centre. The administration computer 50 has a pre-installed operating system program.

The administrator loads data centre management software 70 from CD-ROM 52 onto the administration computer 50. The data centre management software is built on an API offered by VMware Lab Manager software from VMware Inc. 3401 Hillview Ave, Palo Alto, CA 94304. That API enables the data centre management software to install operating systems and to install and configure applications on selected servers within the data centre. Alternative embodiments might use the Opsware Server Automation System from Opsware Inc of 599 N. Mathilda Avenue, Sunnyvale, CA 94085. The data centre management software includes a data centre power management component 72 whose operation will be explained in more detail below.

The administrator then runs the data centre management software and loads a plurality of operating system programs (e.g. Windows Server 2003, Linux) from CD-ROM 54 into RAID storage 62.

Thereafter he loads a plurality of web server and application server programs from CD-ROM 56 into RAID storage 62.

In order to enable the production of dynamic web-pages, some web servers enable the running of other programs to respond to an HTTP request. For example, a web server might fork (i.e. create) a Common Gateway Interface process to generate a dynamic web page. Java Servlets provide similar functionality - each using one of a number of threads runnable within the server process - with a new thread being used to deal with each new HTTP request.

Some application server programs (for example BEA WebLogic, and Apache Tomcat) include a container program that provides deployment and run-time support for application components. A container allows you to monitor and manage supported components as well as the service(s) that monitor and manage the components. A container can be any of the following:

- Connector container that hosts resource adapters
- Web container that hosts JSP, servlets, and static HTML pages
- EJB container that hosts EJB components

He yet further loads application programs, Java Servlets, and other application program components from CD-ROM 58 onto RAID storage 62. To give an example of the former, a web-based directory enquiries application and a web-based fault reporting service application might be loaded onto the RAID storage 62. The latter example will occur where a service-oriented software architecture is being followed in which distributed components are linked together by an application programmer to provide a distributed application program. As will be understood by those skilled in the art, such distributed application programs often require application framework, or middleware, such as the container programs mentioned above.

He yet further loads rack management software onto each of the rack management blade servers 31. The rack management software periodically reports the air temperature within its rack to the administration computer 50.

The rack management software provides an interface which the administrator uses to enter cooling equipment power consumption data 71 which sets out temperature levels which trigger a discrete rise in the power consumption by the fans used to cool the servers in the rack. In the present case, fan speed and airflow values are also included in the data since they are used in determining how far the temperature of the rack will rise if a given increase in processing-related power consumption were to take place. The cooling equipment power consumption data 71 is stored on the rack management server's hard disk.

The administrator uses each rack of servers as a pool of servers to support a plurality of applications. Each time he deploys an application for the first time, he decides which pool of servers (i.e. rack) is to support the application.

Each application program is supplied with a Service Level Agreement Manager component. This component is loaded onto the rack management blade server 31 on the rack chosen by the administrator from CD-ROM 60 (via administration computer 50) as a plug-in component to the rack management software. The component provides an interface allowing the administrator to view and edit a policy file which contains policies which reflect Service Level Agreements agreed between the customer and the data centre operator.

Each application on CD-ROM 58 includes a performance alerting function which sends an event message to the Service Level Agreement manager component 84,86 associated with the application when certain utilisation thresholds are passed (both in the direction of increasing utilisation and decreasing utilisation). The SLAM 84,86 reacts to such events in accordance with the policy associated with it. In cases where an application requires resources beyond the rack on which its SLAM is instantiated, the application communicates with the SLAM on the original rack.

Service Level Agreements for an application will set down, for each application program or program component, the goals (functional and non-functional) of the application / service together with the target level of service the data centre operator is expected to provide to the customer, and the penalties should that target level of service not be provided. SLA's will often include the obligations placed on the customer, which might include the peak demand for application expected or allowed. Obligations placed on the data centre operator might include maximum delay targets for provision of extra servers to support an application experiencing a rise in demand, as well as specifying recovery and repair times.

In order to configure the data centre system to provide the required service levels for the application given demand levels set out in the SLA, the administrator edits the policies associated with the Service Level Agreement manager for that application.

For example, he might enter a policy for a Directory Enquires application, as follows:

1. If load rises above 60% current capacity, make a provisional request to the data centre management software for more resources for Directory Enquiries application;

2. If load falls below 60% current capacity, cancel provisional request, previously made to the data centre management software, for increase in resources for Directory Enquiries application.

3. If load rises above 80% current capacity, make firm request to the data centre management software for more resources for Directory Enquiries application and cancel provisional request;

4. If load falls below 80% current capacity, cancel firm request, previously made to data centre management software, for increase in resources for Directory Enquiries application and re-instate provisional request.

In each case, the current capacity will represent the resources currently allocated to the application - for example, it might represent the number of servers currently running the application.

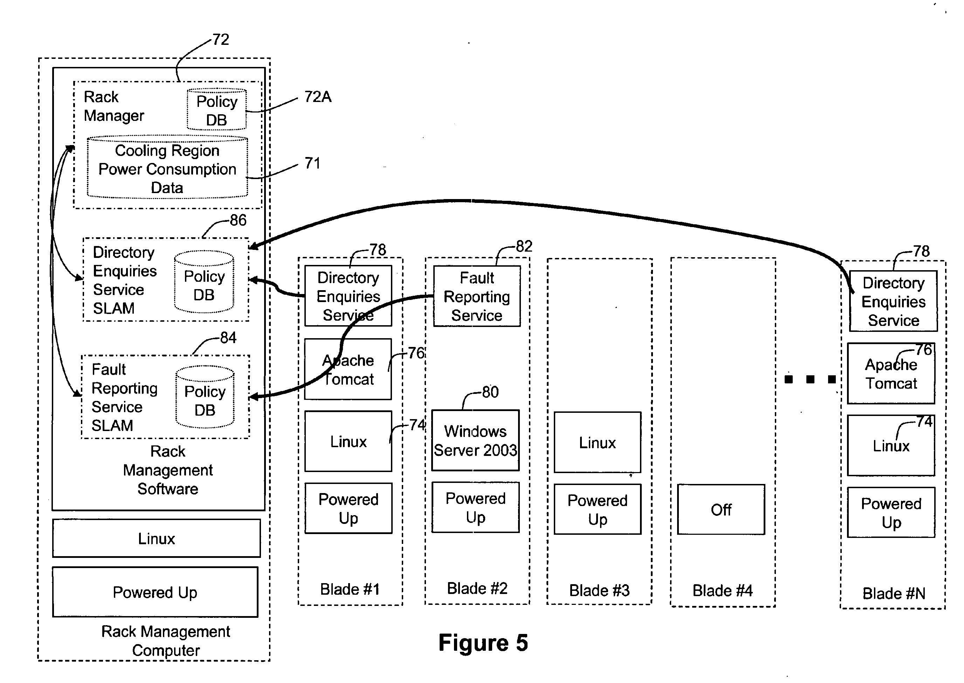

Once this process has been repeated for a plurality of applications, the rack might include servers running different levels of software as seen (by way of example only) in Figure 5.

A rack management component 72 running on the rack management server 31 maintains a table (an example is shown in Table 2 below) which records the status of the blade servers in the rack which it manages.

**Table 2**

| State of Readiness of Blade Server | No. of Blades Currently in State |
|---|---|
| Off | 2 |
| Windows Server 2003 running | 1 |
| Linux running | 1 |
| Windows Server 2003 + Apache Tomcat running | 0 |
| Windows Server 2003 + BEA WebLogic running | 0 |
| Linux + Apache Tomcat running | 0 |
| Linux + BEA WebLogic running | 0 |
| Windows Server 2003 + Application running | 1 |
| Linux + Application running | 0 |
| Windows Server 2003 + Apache Tomcat + Application running | 0 |
| Windows Server 2003 + BEA WebLogic + Application running | 0 |
| Linux + Apache Tomcat + Application running | 2 |
| Linux + BEA WebLogic + Application running | 0 |

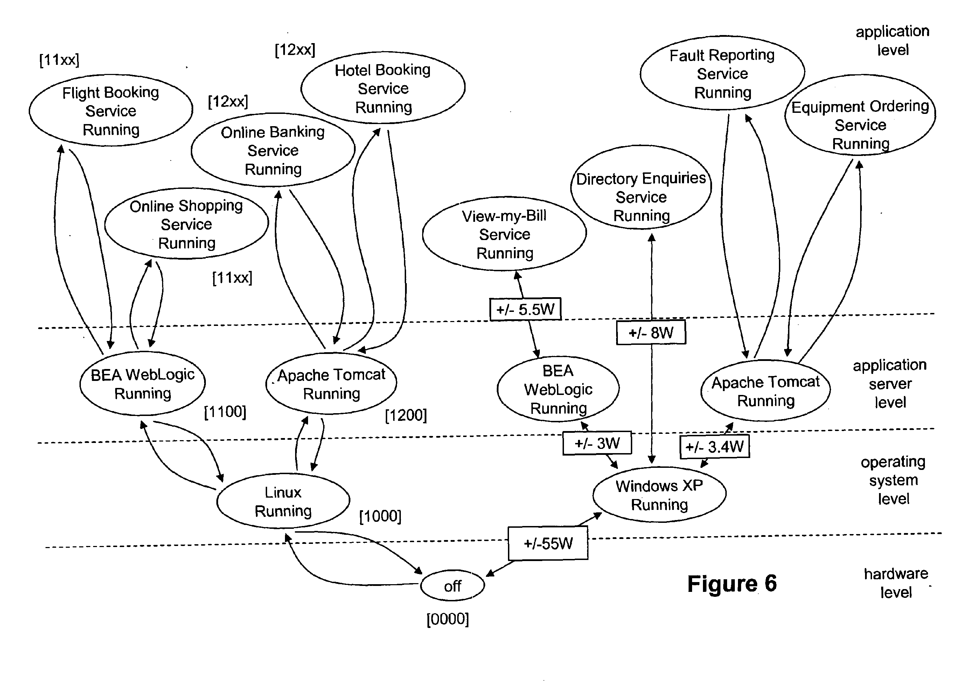

In addition to that, the rack management component 72 maintains a tree data structure which might be visualised as a state diagram (Figure 6) which shows the states of readiness which a blade server might be in, and, for each state of readiness, transitions to more specialised states of readiness (moves towards the leaves of the tree), and/ or transitions to less specialised states of readiness (moves towards the root of the tree).

Also associated with the rack management component 72 is a policy which is set by the administrator using administration computer 50 and stored in policy database 72A.

The administrator will first set application-specific deployment policies which indicate how the rack management component 72 should respond to a request to schedule and deploy a given application received via the administration computer 50. These policies will cause the rack management component 72 to respond by:

   i) checking the availability of any specialised software components and retrieving any missing components and placing them in the local high-speed storage for rapid deployment.

   ii) deploying nodes to relevant positions in the state of preparedness tree (i.e. the data structure seen in Figure 6) given the structure and timing constraints derived from the relevant SLA. For example, for a web-based directory enquiries application, the application-specific policy might indicate that two blade servers in the rack should be brought to the state 'running web-based directory enquiries application' and that at least one server should be kept in the Windows XP running state to allow another instance of the directory enquiries application to be brought into operation should demand for the directory enquiries application increase.

When an application is scheduled and deployed the SLAM sends a message to the rack management component 72 informing it of the identity of the software deployed, that message then being responded to in accordance with the policies entered by the administrator.

The policies also include one or more application-specific power management policies which specify how requests from Service Level Agreement manager components for more (or less) resource are to be handled.

For applications which have SLA's requiring the rapid deployment of extra resource, the policy indicates that the rack management component 72 is to provide the extra resource from the rack irrespective of whether providing that extra resource would likely trigger the fans cooling the rack to move to a higher speed.

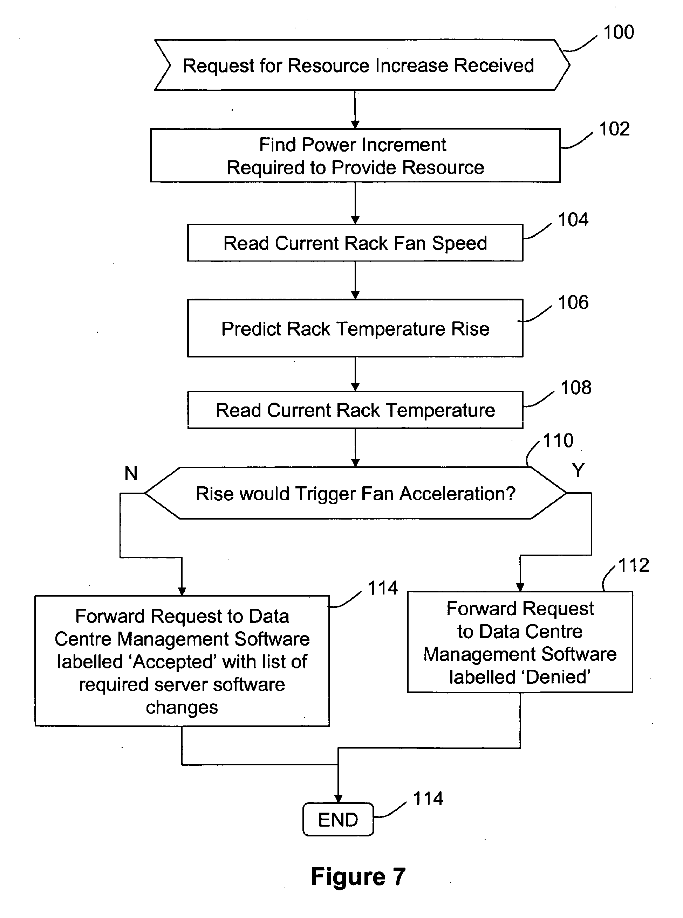

However for application which have less stringent SLAs, the policy indicates that the procedure seen in Figure 7 is to be followed.

The procedure begins by calculating (step 102) the power cost associated with the necessary change in the 'state of preparedness' tree by reading the transition costs from the tree (Figure 6).

Thereafter the rack management blade 31 reads the current rack fan speed (step 104) from the rack fan speed indicator.

Using the value for rack fan speed (and the power consumption data (Table 1) stored in the rack management server 31), the expected rise in rack temperature is found (step 106) using Equation 1 below:

$$\text{air temperature rise} = \frac{0.8 * \text{additional electrical power consumed (Watts)}}{\text{current airflow from fans (litres per second)}}$$

Thereafter, the current rack temperature is read (step 108) from thermometer 32, and it is found (step 110) whether the running of the extra software within the rack would trigger an acceleration in the speed of the rack fans.

If it is found that the running of the extra software would trigger an acceleration in the speed of the rack fans, then the SLAM's request for extra resource is labelled 'denied' and forwarded (step 112) to the data centre management software running on data centre administration computer 50.

If, on the other hand, it is found that the running of the extra software would not trigger an acceleration in the speed of the rack fans, then the SLAM's request for extra resource is labelled 'accepted' and forwarded (step 114) to the data centre management software together with a list of what software changes are to be made to which servers.

On receiving a request labelled 'denied', the data centre management software forwards the request to the rack management components in other racks in order of increasing rack temperature until a rack that accepts the request to run the extra software is found.

On receiving a request labelled 'Accepted', the data centre management software will include a call to the API on which the data centre management software is built which will load operating system, middleware or application software from RAID storage 62 onto the blade servers in the rack which accepted the request, thus moving one or more blade servers to a node closer to the leaves of the state of preparedness tree (Figure 5) and providing the extra resource requested by the application. The software will be loaded on servers in the rack in accordance with the list of software changes included with the forwarded request.

Correspondingly, when policies are triggered which require changing the population of the different states in the state of preparedness tree by purging software from a blade server, a call will be made to the API on which the data centre management software is built which will change the population by purging operating system, middleware or application software from one or more blade servers and thus move the blade server to a node closer to the root of the state of preparedness tree (Figure 6).

After the administrator has entered such policies in the policy databases, the rack management component 72, on receiving resource requests from a SLAM, queries its associated policy file to find any relevant policies and then acts in accordance with those policy to change the population of the different states of readiness within the local server pool.

The rack management component 72 will also have links to machine error messages and system health monitors so that machines either in use, or in the tree that develop problems can be demoted down the tree to a state where maintenance can be carried out.

It will be seen how the above embodiment distributes workload within a data centre to racks which are unlikely to step up cooling power in order to counter the additional heating which will arise because of the running of the extra software. Thus the above embodiment provides a straightforward mechanism for reducing the amount of power consumption within data centres.

Possible variants of the above embodiment include (this list is by no means exhaustive):

i) whilst the above embodiment was described in relation to data centres with blades in the above example, the invention could instead be applied to a collection of computers attached to LAN or to a collection of PC motherboards inserted into rack etc. etc. (acting as servers in each case).

ii) virtualisation can be used to drive up utilisation of a server, by having that server host a number of 'virtual servers', each of which might run an application for a different customer. The same idea can be applied to 'virtual servers' as it is applied to real servers in the above embodiment.

iii) whilst in the above example each of the states of preparedness related to the loading of software, they might additionally relate to the configuring of the application for a given customer.

iv) whilst in the above example the environmental conditions where measured and controlled for each rack of servers (cooled via the airflow from fans shared by the rack), in other embodiments, the environmental conditions could be measured and controlled for each data centre in a group of interconnected data centres (the air in each data centre being cooled by one or more shared computer room air-conditioning units or other shared cooling equipment). In that case, the stepwise change in cooling power required might result from the need to switch on an additional cooling unit.

v) in the above embodiment, one temperature sensor was included per rack. In other embodiments, sensors exist at a granularity of the individual server, such as provided by software from www.lm-sensors.org for the Linux operating system. Temperature updates provided by such software might be managed by policies that control not only trigger levels but also the frequency that updates are supplied to the rack management component. Such policies would indicate that if the measured temp was effectively constant then the update frequency should be low but that a higher update frequency should result when the measured temp changes more frequently. Such a policy would provide the benefit of reducing the management overhead.

vi) In the above embodiment, for some applications, a request for a new resource in a rack was denied owing to a predicted temp rise. More advanced embodiments would also involve an evaluation of any communications requirements or data location requirements that might demanded by the process and that would require it to be installed in a particular rack. If such a further evaluation found that denial is not appropriate the rack management component might move other processes from the rack in order to maintain the thermal goals and the performance goals. This would also enable checking of penalty costs. It might be achieved by clauses in a rack management policy that check for relationships between the new process and existing processes so a line of reasoning might be installation would cause the heat to rise but operationally it needs to be installed here to interact with x send a message to the scheduler. Please redistribute load to allow new installation.

In summary of the above disclosure, a method of operating a data centre is disclosed in which the distribution of processing load takes into account the discrete steps that occur in power consumption by cooling equipment (e.g. an increase in speed of a fan from one preset speed to another preset speed or the starting of an additional air-conditioning unit). For each of a number of cooling regions, data representing expected increases in power consumption resulting from the running of additional software on a processor within that cooling region are stored in persistent storage. On receiving a request from an application for additional resource, a power management component for a cooling region within the data centre looks up the stored data and predicts a temperature rise for the cooling region if the additional resource was to be provided from within the cooling region. If the temperature rise is sufficient to trigger a step change in the power consumption of air-conditioning equipment (including fans and coolers), then an attempt is made to provide the requested resource from a different cooling region.

**Claims**

1. A method of operating a computer system comprising a group of interconnected computers, said method comprising:

   storing, for each of a plurality of subsets of the computers within the computer system, temperature threshold values whose surpassing would trigger a stepwise change in the amount of power required by environmental conditioning equipment to keep the temperature in said subset at a desired level;
   measuring the temperature within each subset;
   receiving requests for data processing to be carried out by said computer system;
   allocating requested data processing to subsets which are least likely to require a stepwise change in the amount of power required to keep the temperature in said subset at a desired level.

2. A method according to claim 1 wherein the subset is a data centre within a group of data centres.

3. A method according to claim 1 wherein the subset is a rack of servers.

4. A method according to claim 1 wherein the subset is a server.

**Figure 1**

**Figure 2**

warm air

external air

50

52

54

56

58

60

Hybrid Refrigeration / Fresh Air Cooling Unit

62

42

43

cool air

**Figure 3**

**Figure 4**

**Figure 5**

EP 2 098 942 A1

application level

[11xx]

[12xx]

Flight Booking Service Running

[12xx]

Hotel Booking Service Running

Fault Reporting Service Running

Online Banking Service Running

Equipment Ordering Service Running

Online Shopping Service Running

Directory Enquiries Service Running

[11xx]

View-my-Bill Service Running

+/- 5.5W

+/- 8W

BEA WebLogic Running

[1100]

Apache Tomcat Running

[1200]

BEA WebLogic Running

Apache Tomcat Running

application server level

+/- 3W

+/- 3.4W

operating system level

Linux Running

[1000]

Windows XP Running

+/-55W

off

[0000]

Figure 6

hardware level

EP 2 098 942 A1

14

> Request for Resource Increase Received — 100

Find Power Increment
Required to Provide Resource — 102

Read Current Rack Fan Speed — 104

Predict Rack Temperature Rise — 106

Read Current Rack Temperature — 108

N — Rise would Trigger Fan Acceleration? — Y — 110

Forward Request to Data Centre Management Software labelled 'Accepted' with list of required server software changes — 114

Forward Request to Data Centre Management Software labelled 'Denied' — 112

END — 114

**Figure 7**

**European Patent Office**

## EUROPEAN SEARCH REPORT

Application Number

EP 08 25 0715

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/055590 A1 (FARKAS KEITH ISTVAN [US] ET AL) 10 March 2005 (2005-03-10) * paragraphs [0019], [0020], [0046]; figure 1 * | 1-4 | INV. G06F1/20 G06F9/50 |
| X | US 2005/228618 A1 (PATEL CHANDRAKANT D [US] ET AL) 13 October 2005 (2005-10-13) * paragraphs [0009], [0023], [0026], [0027], [0034], [0046], [0060] - [0066], [0072], [0073], [0076] - [0078], [0085], [0105], [0115] * | 1-4 | |
| A | US 2007/047199 A1 (TSUTSUI TOMONORI [JP]) 1 March 2007 (2007-03-01) * paragraphs [0110], [0113] - [0118]; figures 15-17 * | 1 | |

TECHNICAL FIELDS SEARCHED (IPC)

G06F

The present search report has been drawn up for all claims

| Place of search | Date of completion of the search | Examiner |
|---|---|---|
| The Hague | 28 July 2008 | Tonet, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 25 0715

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2008

| Patent document cited in search report | | Publication date | Patent family member(s) | | Publication date |
|---|---|---|---|---|---|
| US 2005055590 | A1 | 10-03-2005 | NONE | | |
| US 2005228618 | A1 | 13-10-2005 | CN | 1965297 A | 16-05-2007 |
| | | | WO | 2005101195 A2 | 27-10-2005 |
| US 2007047199 | A1 | 01-03-2007 | CN | 1924757 A | 07-03-2007 |
| | | | JP | 2007065870 A | 15-03-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060047808 A